# EUROPEAN PATENT SPECIFICATION

(11) **EP 3 100 581 B1**
(45) Date of publication and mention of the grant of the patent: **10.06.2020**
(21) Application number: 15845425.6
(22) Date of filing: 25.09.2015
(51) Int. Cl.: H04M 1/60, H04M 1/725, H04W 88/02

(54) **INTELLIGENT EARPLUG SYSTEM**
INTELLIGENTES OHRSTÖPSELSYSTEM
SYSTÈME D'ÉCOUTEUR INTELLIGENT

(30) Priority: 25.09.2014 US 201462055042 P
(43) Date of publication of application: 07.12.2016
(73) Proprietor: Bose Corporation, Framingham, Massachusetts 01701-9168 (US)
(72) Inventor: LEE, Daniel, La Jolla, CA 92039 (US)
(74) Representative: Attali, Pascal
(86) International application number: PCT/US2015/052498
(87) International publication number: WO 2016/049600

(56) References cited:
- WO-A1-2013/009988
- US-A1- 2008 311 966
- US-A1- 2012 184 215
- US-A1- 2013 101 130
- US-A1- 2013 157 575
- US-A1- 2014 233 753
- US-A1- 2014 335 914
- US-A1- 2015 071 457

## Description

This application claims the benefit of priority to earlier filed U.S. Provisional Patent Application, having serial number 62/055,042, filed September 25, 2014, entitled, "INTELLIGENT EARPLUG SYSTEM", to Daniel Lee.

US 2008/0311966 A1 discloses a battery-powered miniature wireless headset is worn as a single earring or as a pair of earrings. The headset communicates with a phone or other host over a bidirectional wireless communication link allowing hands-free operation. The wireless earring headset is comprised of an electronics module, a speaker assembly, a microphone assembly, an antenna, a battery, user interface devices such as a switch and LED, and an attachment means employing either a clamp or a pierced earring post with clutch. The electronics module, which may be a single chip, comprises a wireless transceiver, a processor with associated memory, an audio codec, power supply electronics, and other components. In use the device is attached to the pinna of the wearer's ear using either a clamp or a post inserted through a pinna piercing and secured by a clutch or nut. The clamp or post may be permanently attached to the device or removably attached using a magnetic or mechanical attachment means. The user positions the speaker inside of, or at the entrance to, the ear canal. The microphone is mounted in such a way that it points toward the user's mouth and may be positioned on a boom to move it closer to the mouth.

WO 2013/009988 A1 discloses a system in which sensors are used for detecting phases of sleep.

The invention aims at solving the drawbacks of prior art solutions and is defined by the features according to system claim 1 and method claim 7.

Advantageous embodiments are defined in the dependent claims.

### BRIEF DESCRIPTION OF THE DRAWINGS

Embodiments of the present disclosure will be more readily understood by reference to the following figures, in which like reference numbers and designations indicate like elements.
FIGURE 1 illustrates an earplug apparatus, wherein a speaker, sensors, and a wireless transmission module communicate with at least one electronic device, according to one embodiment of the present teachings.
FIGURE 2 illustrates a smart earplug system, according to one embodiment of the present teachings.

### DETAILED DESCRIPTION

### Overview

The present teachings disclose a method, apparatus, system and article of manufacture for an earplug device that communicates with at least one electronic device. The present disclosure broadens the functionality of a basic earplug into a "smart" earplug. "Smart" means the disclosed earplug device has advanced computing capabilities and connectivity.

Earplugs are a common remedy for people trying to sleep in noisy environments but a major limitation is that a user cannot reliably wake up to alarms. Several people have attempted to solve this problem but none have brought the concept to market. This was because earlier earplug alarm clocks lacked in major features that could give it a favorable product market fit. For example, the hassle in having to charge an earplug alarm clock everyday is a major deterrent for regular usage.

The present teachings disclose a speaker, sensors, a wireless transmission module, a battery, and a processor integrated into an earplug device that communicates wirelessly with at least one electronic device. The present teachings describe how the user can go to sleep wearing the earplug device and still hear an alarm. Further, the alarm that awakens the user is not audible to other people, thereby not disturbing others. The present teachings disclose how the alarm gradually increases in volume, eventually reaching dB levels that will most likely awaken the user. If the user does not wake up for a pre-determined time, the earplug device triggers an alarm from the at least one electronic device to ring as a backup measure. The earplug device also has at least one biometric sensor, such as an accelerometer, that tracks motion of the user at night. This allows for tracking of sleep cycles of the user and allows for a "smart wake up" function. The "smart wake up" function will prevent the alarm from sounding while the user is in rapid eye movement ("REM") sleep to make it easier to wake up.

It will be appreciated that the earplug device may be used in a variety of settings. The following list is not an exhaustive list but is meant to assist in understanding the earplug device. As an example, students in noisy college environments who have to wake up and not disturb roommates may wear the earplug device. Another example applies to public transit commuters who take a nap and have to wake up when they approach their designated stop areas. Other examples are couples with a snoring partner where the other partner has to wake up at a certain time; people who desire to monitor their sleep; people who choose to use smart technology to optimize their sleep; people who have trouble sleeping and use binaural/isochronic/monaural beats to help them fall asleep; people who take a nap in quiet locations and not want to disturb others with their alarm, *e.g*., students studying at a library. The earplug device may also take advantage of additional technology available in the smartphone platform. For example, the earplug device may use a smartphone's GPS to track when the user nears a location and to sound the alarm accordingly.

The earplug device also implements the use of binaural beats by playing slightly different frequencies in each ear that causes a beat to be formed in the user's head. This causes "brain entrainment," a process whereby an operating frequency of a brain aligns itself with a binaural beat formed. Lucid dreaming communities value binaural beats to help them achieve an appropriate state of mind. The lucid dreaming communities may find wearing the earplug device useful because it may trigger a soft alarm during deep REM cycle; this is done so that the user is notified inside of her dream that she is dreaming. Brain entrainment helps induce sleep. Brain entrainment may also be used with the earplug device to stimulate other desired brain states, such as focus and alertness. The earplug device may also utilize received signal strength indicator ("RSSI") proximity sensing to allow for tracking of the earplug device if misplaced. RSSI measures power present in a received radio signal.

The present disclosure overcomes a myriad of limitations due to an inability to hear certain sounds, for example, an alarm, while wearing earplugs. The present disclosure has additional functionalities. The embodiments set forth are offered to assist in understanding other functionalities of the earplug device and do not represent an exhaustive list. In one embodiment, the earplug device may set iOS applications to send notifications other than alarm clocks. "iOS" is a mobile operating system previously known as iPhone operating system. The user may choose from a list of contacts to have the earplug device send her a notification when certain people call. In one embodiment, the earplug device may connect to other devices, such as a baby monitor. The baby monitor may trigger the alarm to alert a mother to the needs of her baby. In one embodiment, the earplug device includes an ear bone microphone for applications in allowing for easy to hear phone calls in loud environments. For example, a construction worker may use the earplug device in the loud environments. Noise reduction component of the earplugs may allow the user to hear conversations clearly as an ear bone conduction component allows a voice of a user to come through clearly. In one embodiment, the earplug device may stream music into speakers, which may be set to play a preset playlist for a pre-determined amount of time at night.

The present teachings disclose how users may enjoy benefits of noise masking earplugs while utilizing functions enabled by a speaker and sensors. The present teachings describe how to make and use a high technology earplug device that is not currently available in the art.

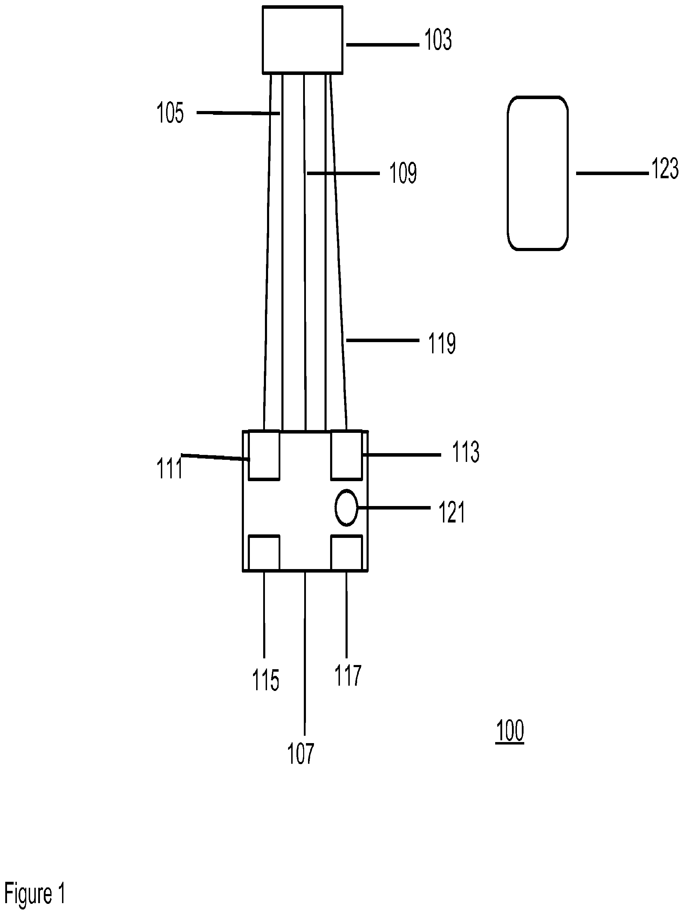

Referring now generally to Figure 1, one embodiment of an earplug apparatus 100 is disclosed. The earplug apparatus 100 generally comprises a speaker 103, an earplug 105, an electronics base 107, a cable 109, sensors 111, a wireless transmission module 113, a battery 115, a processor 117, a replaceable foam earplug 119, an accelerometer 121, and at least one electronic device 123.

Connecting the speaker 103 to the electronics base 107 with the cable 109 may allow the speaker 103 to be easily detached from the electronics base 107. In one embodiment, the cable 109 may be a threaded cable. Easy detachment of the speaker 103 from the electronics base 107 is useful because the earplug 105 may be easily replaced. When the speaker 103 is removed from the electronics base 107, the earplug 105 can be slipped off a wiring of the speaker 103, replaced with a new one, and then put back onto the electronics base 107.

The speaker 103 may be designed with a variety of different technologies. In one embodiment, the earplug device may utilize a piezoelectric transducer, which is a device that converts electrical pulses to mechanical vibrations. In one embodiment, the earplug device may use a balanced armature, which is a sound transducer design that increases electrical efficiency. In one embodiment, the earplug device may use a balanced armature, which is a sound transducer design that increases electrical efficiency. The piezoelectric sensor and/or the balanced armature may be used to handle tight space constraints and to minimize energy consumption. In one embodiment, the speaker 103 may be designed by a variety of different technologies, such as, and is not limited to, electromagnetics and thermo acoustics. In one embodiment, the speaker 103 may serve as a buzzer and may vibrate instead of produce sound.

The speaker 103 is positioned as deep into an ear canal as possible to further minimize energy consumption. The cable 109 goes from the speaker 103 through the earplug 105 and to the electronics base 107. This allows for replacement of an actual earplug component with the replaceable foam earplug 119 for hygienic purposes.

Standard foam earplugs for noise reduction are usually rolled up to fit into the ear canal. In one embodiment, a custom foam (polyurethane) earplug 105 with a small axial hole where the cable 109 passes through may be used. The custom foam (polyurethane) earplug 105 minimizes noise that goes through the earplug into the ear canal in order to achieve a higher noise reduction rating ("NRR"). The NRR is a unit of measurement that determines effectiveness of hearing protection devices to decrease sound exposure in an environment. A higher NRR indicates a greater potential for noise reduction. In another embodiment, silicone earplugs may be used for greater durability.

The electronics base 107 is comprised of a housing. In one embodiment, the housing may be made of smooth plastic to resist the tendency of the earplug to catch on an edge and be pulled out of the ear. The housing is ergonomically designed to distribute any load evenly over an outer ear.

The sensors 111, the wireless transmission module 113, the processor 117, and the battery 115 are brought together on a central printed circuit board which is placed inside the housing of the electronics base 107. In one embodiment, the housing may have a threaded hole that connects to an axial jack through which the speaker 103 connects to electronic components. In one embodiment, a speaker wiring may have a certain length so that it can traverse through a length of the earplug.

In one embodiment, the earplug device utilizes Bluetooth low energy ("BLE") as the wireless transmission module 113 to minimize energy consumption. With the advent of BLE technology, there is a growing trend of imaginative "smart" devices, enabling basic objects to have additional functionality. BLE technology uses less power consumption within a similar communication range. This means that while similar earplug device designs require nightly recharging, the user of this earplug device does not have to do so. A ping rate of a wireless signal should be very low as to preserve energy because a one-second delay on the alarm is inconsequential to an alarm clock functionality. "Ping" is an acronym for Packet Internet or Inter-Network Groper. The ping rate is a response time for a system to speak to a server. The present teachings disclose that a lower ping rate is better than a higher ping rate as it entails significant energy savings.

In one embodiment, the battery 115 may be a traditional coin cell battery because of the high internal resistance and low maximum current values. Using the traditional coin cell battery takes advantage of BLE's low current requirements, which allows for prolonged usage on a single battery.

The processor 117 may be integrated into a system-on-chip solution package with the wireless transmission module 113. In one embodiment, a simple microcontroller may receive a signal from the wireless transmission module 113 and output a corresponding electrical signal.

According to the invention, the sensors 111 for acquiring biometric data include an accelerometer (121). The sensors, in addition to the accelerometer, may also be in the form of a temperature sensor, or a photo sensor. Movements of people, temperature, and heart rate vary predictably through different sleep phases. The sensors 111 correlate the movement-temperature data to analyze and predict when the user is in a certain stage of sleep. This information would be used in a form of a bio-clock, where users would be awakened in a pre-determined time frame when they are in a lighter phase of sleep.

As indicated above, according to the invention, the accelerometer 121 acts as one of the sensors 111. The accelerometer 121 is a device that measures acceleration. The accelerometer 121 tracks head movements during sleep to monitor REM cycles of the user and wake him up during a lighter phase of sleep. People wake up feeling groggy if they awaken during REM sleep. Using the accelerometer 121 prevents waking the user up during his REM cycle.

The at least one electronic device 123 is any device with advanced computing and wireless connectivity capabilities, such as smartphones.

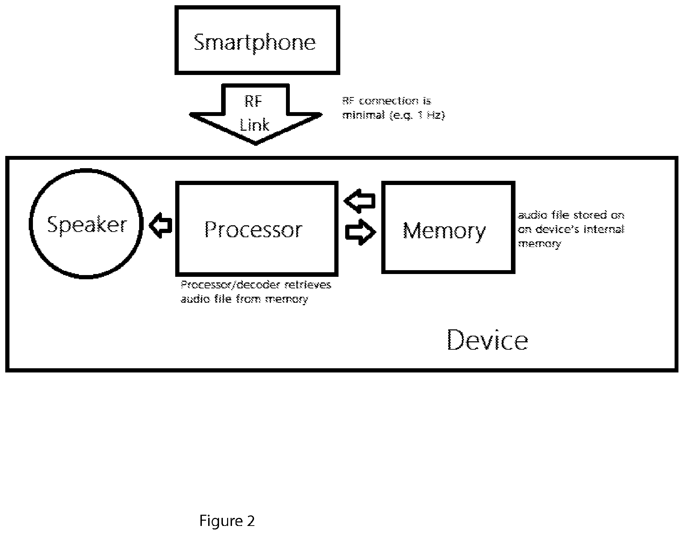

For RF devices that are intended to be disposed upon a human head all night, radiation exposure is a health concern, particularly for a device that will be playing audio for 8 or more hours a night. Referring now to Figure 2, in one embodiment, a smart earplug device 200 is illustrated. The smart earplug device 200 is adapted such that it does not stream audio continuously throughout the night, which would mean that the RF communications link is connecting continuously at a fast rate. Instead, we upload sounds to the smart earplug device 200 onboard memory itself that are then looped throughout the night. By playing back stored audio files instead of streaming them over bluetooth constantly, we achieve ultra-low radiation exposure. Simultaneously, this brings the added benefit of achieving much higher audio playback times, so smaller batteries can be used, which in turn allows for smaller ear mounted devices.

In this configuration, users of the smart earplug device 200 will be exposed to less bluetooth radiation than a businessperson is exposed to in a single phone call when using a bluetooth headset.

In one embodiment of the smart earplug device 200, an on-board memory that can be rewritten over-the-air through an RF link (e.g. bluetooth) by a paired controlling device (e.g. smartphone) with new audio files. The smart earplug device 200 has a processor or decoder that then pulls the audio file from the memory and then plays it on a speaker. This audio file can be played and looped for the entire night without having to constantly stream files over Bluetooth, and done in a very power-conserving fashion.

The use case scenario for our implementation of the smart earplug device 200 is that the user selects an audio track that he/she wants to play on a smartphone and presses upload. The audio track is uploaded into the earplugs and then is looped continuously. The smartphone occasionally reconnects with the earplugs (e.g. ∼1 reconnect per second) to maintain a connection to send over occasional information if necessary (e.g. a sync command to ensure the left and right earplug are time-matched. In one variation, the smart earplug device 200 is instructed to turn off after a certain time period.)

This is also beneficial because the memory size needed on the chip itself can be very small since the bulk of the audio files are stored on the paired device (smartphone) and only the audio file being played at the moment is taking up memory on the earplugs. This means only a very small amount of memory space is required on the earplugs. This is very convenient as the flash memory that is often manufactured onto the same chip as a microcontroller can be sufficiently large enough to store the active audio file - meaning a separate flash module may not be needed, saving cost/space/complexity.

In one embodiment, the smart earplug device 200 is in the implementation of two components: one in-ear device with a small amount of flash memory and a master controlling device (smartphone). The smartphone has multiple audio files to select from. The user chooses one of the short audio clips and uploads it onto the small amount of flash memory on the in-ear device. The in-ear device loops that sound all through the night, and is able to loop it through the night on a small battery because of the reduced power consumption of not having the power overhead of maintaining a constant Bluetooth connection. Also as a result of not constantly streaming in a Bluetooth connection, the user is exposed to minimal bluetooth radiation, less than what a businessman is exposed to during a single phone call using a bluetooth headset.

Although the disclosed embodiments have been described employing a smart earplug device 200, literally any wireless head-mounted device may be adapted using the principals and methods described herein to reduce radiation exposure to a user, which may also readily maintain a small form factor.

Those skilled in the art will appreciate that the present teachings may be practiced with other system configurations, including hand-held devices, multiprocessor systems, microprocessor-based or programmable consumer electronics, network PC's, minicomputers, mainframe computers, and the like. The present teachings may also be practiced in distributed computing environments where tasks are performed by remote processing devices that are linked through a communications network. In a distributed computing environment, program modules may be located in both local and remote memory storage devices.

The computer described herein above may operate in a networked environment using logical connections to one or more remote computers. These logical connections can be achieved using a communication device that is coupled to or be a part of the computer; the present teachings are not limited to a particular type of communications device. The remote computer may be another computer, a server, a router, a network PC, a client, a peer device or other common network node, and typically includes many or all of the elements described above relative to the computer. The logical connections include a local-area network (LAN) and a wide-area network (WAN). Such networking environments are commonplace in office networks, enterprise-wide computer networks, intranets and the Internet, which are all types of networks.

When used in a LAN-networking environment, the computer is connected to the local network through a network interface or adapter, which is one type of communications device. When used in a WAN-networking environment, the computer typically includes a modem, a type of communications device, or any other type of communications device for establishing communications over the wide area network, such as the Internet.

The foregoing description illustrates exemplary implementations, and novel features, of aspects of an earplug device that communicates with at least one electronic device. Alternative implementations are suggested, but it is impractical to list all alternative implementations of the present teachings. Therefore, the scope of the presented disclosure should be determined only by the appended claims, and should not be limited by features illustrated in the foregoing description except insofar as such limitation is recited in an appended claim.

While the above description has pointed out novel features of the present disclosure as applied to various embodiments, the skilled person will understand that various changes in the form and details of the present teachings illustrated may be made without departing from the scope of the present teachings.

The scope of the present teachings is properly defined by the appended claims rather than by the foregoing description. Furthermore, to the extent that the term "includes" is used in either the detailed description or the claims, such term is intended to be inclusive in a manner similar to the term "comprising."

## Claims

1. A system comprising:
an earphone comprising:
a first earplug (105),
a processor,
a wireless interface,
at least one sensor (111),
a battery (115),
a memory, and
a speaker (103); and
an electronic device (123) separate from the earphone and in communication with the earphone via the wireless interface; wherein
the electronic device is configured to transmit an audio file to the earphone for storage in the memory;
the processor of the earphone is configured to cause the speaker to play the audio (105) stored in the memory in a loop;
the electronic device and the processor of the earphone do not operate the wireless interface continuously by streaming audio files after the audio file is stored in the memory; **characterised in that**:
the sensor is arranged for detecting data indicative of a stage of sleep of a user of the earphone, and based on the detected data, the earphone is configured to cause an alarm to sound to wake up the user during a lighter phase of sleep by using an accelerometer (121) comprised in the sensor and arranged for tracking head movements of the user during sleep.

2. The system of claim 1, further comprising:
a second earplug,
wherein the electronic device is configured to occasionally reconnect with the first and
second earplugs to maintain a connection to send over occasional information, such as a sync command to ensure the first and second earplugs are time-matched.

3. The system of claim 1, wherein the electronic device (123) is configured to write the audio file to the memory of the earphone over the wireless interface of the earphone.

4. The system of claim 1, wherein the memory and the processor are in a single microchip.

5. The system of claim 1, wherein the at least one sensor (111) comprises a temperature sensor.

6. The system of claim 5, wherein the at least one sensor (111) is configured to correlate the movement-temperature data to analyze and derive, from the movement-temperature data, when the user is in a certain stage of sleep.

7. A method for implementation in a system comprising:
an earphone comprising:
a first earplug (105),
a processor,
a wireless interface,
at least one sensor (111), comprising an accelerometer (121) arranged for tracking head movements of a user of the earphone during sleep,
a battery (115),
a memory, and
a speaker (103); and
an electronic device (123) separate from the earphone and in communication with the earphone via the wireless interface; wherein
the electronic device is configured to transmit an audio file to the earphone for storage in the memory;
the processor of the earphone is configured to cause the speaker to play the audio (105) stored in the memory in a loop;
the electronic device and the processor of the earphone do not operate the wireless interface continuously by streaming audio files after the audio file is stored in the memory;
the method **characterised by** the steps of:
detecting, by using the accelerometer (121) comprised in the sensor, data indicative of a stage of sleep of a user of the earphone, and
based on the detected data, causing an alarm to sound to wake up the user during a lighter phase of sleep.

## Patentansprüche

1. System, Folgendes umfassend:
einen Ohrhörer, Folgendes umfassend:
einen ersten Ohrstöpsel (105),
einen Prozessor,
eine drahtlose Schnittstelle,
mindestens einen Sensor (111),
eine Batterie (115),
einen Speicher, und
einen Lautsprecher (103); und
eine elektronische Vorrichtung (123), von dem Ohrhörer getrennt, und über die drahtlose Schnittstelle in Kommunkation mit dem Ohrhörer; wobei die elektronische Vorrichtung konfiguriert ist, eine Audio-Datei zum Speichern in dem Speicher an den Ohrhörer zu übertragen;
der Prozessor des Ohrhörers konfiguriert ist, um dafür zu sorgen, dass der Lautsprecher das in dem Speicher gespeicherte Audio (105) in einer Schleife abspielt;
die elektronische Vorrichtung und der Prozessor des Ohrhörers die drahtlose Schnittstelle nicht ständig durch Streamen von Audio-Dateien betreiben, nachdem die Audio-Datei in dem Speicher gespeichert wurde; **dadurch gekennzeichnet, dass**:
der Sensor zum Detektieren von Daten angeordnet ist, die auf eine Schlafphase eines Nutzers des Ohrhörers hinweisen, und der Ohrhörer konfiguriert ist, um basierend auf den detektierten Daten dafür zu sorgen, dass ein Alarm erklingt, um den Nutzer während einer leichteren Schlafphase unter Verwendung eines Beschleunigungsmessers (121), der in dem Sensor enthalten ist, zu wecken und angeordnet ist, um Kopfbewegungen des Nutzers während des Schlafes zu verfolgen.

2. System nach Anspruch 1, weiter Folgendes umfassend:
einen zweiten Ohrstöpsel,
wobei die elektronische Vorrichtung konfiguriert ist, um sich gelegentlich wieder mit dem ersten und zweiten Ohrstöpsel zu verbinden, um eine Verbindung zum Schicken gelegentlicher Informationen, wie einen Sync-Befehl, aufrechtzuerhalten, um zu gewährleisten, dass der erste und zweite Ohrstöpsel zeitlich abgestimmt sind.

3. System nach Anspruch 1, wobei die elektronische Vorrichtung (123) konfiguriert ist, um die Audio-Datei über die drahtlose Schnittstelle des Ohrhörers in den Speicher des Ohrhörers zu schreiben.

4. System nach Anspruch 1, wobei sich der Speicher und der Prozessor in einem einzigen Mikrochip befinden.

5. System nach Anspruch 1, wobei der mindestens eine Sensor (111) einen Temperatursensor umfasst.

6. System nach Anspruch 5, wobei der mindestens eine Sensor (111) konfiguriert ist, um die Bewegungs-Temperatur-Daten zu korrelieren, um aus den Bewegungs-Temperatur-Daten zu analysieren und abzuleiten, wann der Nutzer in einer bestimmten Schlafphase ist.

7. Verfahren zum Implementieren in einem System, Folgendes umfassend:
einen Ohrhörer, Folgendes umfassend:
einen ersten Ohrstöpsel (105),
einen Prozessor,
eine drahtlose Schnittstelle,
mindestens einen Sensor (111), einen Beschleunigungsmesser (121) umfassend, der angeordnet ist, um Kopfbewegungen eines Nutzers des Ohrhörers während des Schlafes zu verfolgen,
eine Batterie (115),
einen Speicher, und
einen Lautsprecher (103); und
eine elektronische Vorrichtung (123), von dem Ohrhörer getrennt, und über die drahtlose Schnittstelle in Kommunkation mit dem Ohrhörer; wobei die elektronische Vorrichtung konfiguriert ist, eine Audio-Datei zum Speichern in dem Speicher an den Ohrhörer zu übertragen;
der Prozessor des Ohrhörers konfiguriert ist, um dafür zu sorgen, dass der Lautsprecher das in dem Speicher gespeicherte Audio (105) in einer Schleife abspielt;
die elektronische Vorrichtung und der Prozessor des Ohrhörers die drahtlose Schnittstelle nicht ständig durch Streamen von Audio-Dateien betreiben, nachdem die Audio-Datei in dem Speicher gespeichert wurde;
wobei das Verfahren durch die folgenden Schritte gekennzeichnet ist:
Detektieren, durch Verwenden des Beschleunigungsmessers (121), der in dem Sensor enthalten ist, von Daten, die auf eine Schlafphase eines Nutzers des Ohrhörers hinweisen, und
basierend auf den detektierten Daten dafür zu sorgen, dass ein Alarm erklingt, um den Nutzer während einer leichteren Schlafphase zu wecken.

## Revendications

1. Système comprenant :
un écouteur comprenant :
un premier bouchon auriculaire (105),
un processeur,
une interface sans fil,
au moins un capteur (111),
une batterie (115),
une mémoire, et
un haut-parleur (103) ; et
un dispositif électronique (123) séparé de l'écouteur et en communication avec l'écouteur via l'interface sans fil ; dans lequel
le dispositif électronique est configuré pour transmettre un fichier audio à l'écouteur pour un stockage dans la mémoire ;
le processeur de l'écouteur est configuré pour amener le haut-parleur à lire en boucle le contenu audio (105) stocké dans la mémoire ;
le dispositif électronique et le processeur de l'écouteur ne font pas fonctionner l'interface sans fil de manière continue en diffusant en continu des fichiers audio après que le fichier audio est stocké dans la mémoire ; **caractérisé en ce que** :
le capteur est agencé pour détecter des données indicatives d'un stade du sommeil d'un utilisateur de l'écouteur et, sur la base des données détectées, l'écouteur est configuré pour amener une alarme à sonner pour réveiller l'utilisateur durant une phase plus légère du sommeil en utilisant un accéléromètre (121) compris dans le capteur et agencé pour suivre des mouvements de tête de l'utilisateur durant le sommeil.

2. Système selon la revendication 1, comprenant en outre :
un second bouchon auriculaire,
dans lequel le dispositif électronique est configuré pour se reconnecter occasionnellement avec les premier et second bouchons auriculaires pour maintenir une connexion pour envoyer des informations occasionnelles, telles qu'une commande de synchronisation pour garantir que les premier et second bouchons auriculaires soient accordés en temps.

3. Système selon la revendication 1, dans lequel le dispositif électronique (123) est configuré pour écrire le fichier audio dans la mémoire de l'écouteur sur l'interface sans fil de l'écouteur.

4. Système selon la revendication 1, dans lequel la mémoire et le processeur sont dans une unique micro-puce.

5. Système selon la revendication 1, dans lequel l'au moins un capteur (111) comprend un capteur de température.

6. Système selon la revendication 5, dans lequel l'au moins un capteur (111) est configuré pour mettre en corrélation des données de mouvement-température pour analyser et obtenir, à partir des données de mouvement-température, quand l'utilisateur est dans un certain stade du sommeil.

7. Procédé pour une mise en œuvre dans un système comprenant :
un écouteur comprenant :
un premier bouchon auriculaire (105),
un processeur,
une interface sans fil,
au moins un capteur (111) comprenant un accéléromètre (121) agencé pour suivre des mouvements de tête d'un utilisateur de l'écouteur durant le sommeil,
une batterie (115),
une mémoire, et
un haut-parleur (103) ; et
un dispositif électronique (123) séparé de l'écouteur et en communication avec l'écouteur via l'interface sans fil ; dans lequel
le dispositif électronique est configuré pour transmettre un fichier audio à l'écouteur pour un stockage dans la mémoire ;
le processeur de l'écouteur est configuré pour amener le haut-parleur à lire en boucle le contenu audio (105) stocké dans la mémoire ;
le dispositif électronique et le processeur de l'écouteur ne font pas fonctionner l'interface sans fil de manière continue en diffusant en continu des fichiers audio après que le fichier audio est stocké dans la mémoire ;
le procédé étant **caractérisé par** les étapes suivantes :
la détection, en utilisant l'accéléromètre (121) compris dans le capteur, de données indicatives d'un stade du sommeil d'un utilisateur de l'écouteur et,
sur la base des données détectées, le fait d'amener une alarme à sonner pour réveiller l'utilisateur durant une phase plus légère du sommeil.
